# EUROPEAN PATENT SPECIFICATION

(11) **EP 3 670 230 B1**
(45) Date of publication and mention of the grant of the patent: **29.03.2023**
(21) Application number: 18213935.2
(22) Date of filing: 19.12.2018
(51) Int. Cl.: B60K 35/00, B60W 30/08, B60W 30/095

(54) **METHOD FOR OPERATING A DISPLAY DEVICE OF A MOTOR VEHICLE, CONTROL UNIT, DISPLAY DEVICE, AND MOTOR VEHICLE**
VERFAHREN ZUM BETREIBEN EINER ANZEIGEVORRICHTUNG EINES KRAFTFAHRZEUGS, STEUEREINHEIT, ANZEIGEVORRICHTUNG UND KRAFTFAHRZEUG
PROCÉDÉ DE FONCTIONNEMENT D'UN DISPOSITIF D'AFFICHAGE D'UN VÉHICULE À MOTEUR, UNITÉ DE COMMANDE, DISPOSITIF D'AFFICHAGE ET VÉHICULE À MOTEUR

(43) Date of publication of application: 24.06.2020
(73) Proprietor: AUDI AG, 85045 Ingolstadt (DE); LG Electronics Inc., Youngdungpo-gu Seoul 150-721 (KR)
(72) Inventor: HÉLOT, Jacques, 85051 Ingolstadt (DE); MÜLLER, Ulrich, 85055 Ingolstadt (DE); CHUN, Sewon, Seocho-gu Seoul (KR); SONG, Jieun, Songpa-gu Seoul (KR); KIM, Soyoung, Gangseo-gu Seoul (KR)
(74) Representative: Hofstetter, Schurack & Partner

(56) References cited:
- EP-A1- 2 993 072
- WO-A1-2008/093983
- US-A1- 2017 334 455

## Description

The invention relates to a method for operating a display device of a motor vehicle. Said display device is configured to be switched from a transparent state into an opaque state, and vice versa. Therefore, the display device may, for example, comprise a display screen unit with a display surface, wherein the display screen unit may comprise a sight protection element. A display screen unit is defined as a component or construction part to display a graphical element and may be a screen. A sight protection element, that could likewise be called visibility protection element, visual protection element, or switchable blind element, is defined as a structural element, component or member that is designed to set or adjust or regulate the degree of transparency and/or opacity of the display screen unit. In other words, the sight protection element is likewise designed to set or regulate or adjust a degree of opacity.

Usually, motor vehicles nowadays comprise a display device with one or more screens. However, depending on their arrangement, if, for example, the screen is arranged on a dashboard of the motor vehicle, the screen may cover part of the view through the windshield. Future motor vehicles will likely have more screens or bigger screens, since more and more information will possibly be displayed. One idea is to provide a display device with a screen that may be displaced from an exposed position, in which the screen is in the visual field, into a hidden or stowed position by being displaced into the dashboard. It is possible to move said screen back into the visual field during a piloted or autonomous driving mode.

WO 2008/093983 A1 discloses a display device for a vehicle and a displaying method using the same that transmits the broadcasting information of DMB and the location information through GPS and that also includes the display providing the screen that is capable of transparency control, and the described screen above that is flexible material so that it is not restricted from any structure or vehicle and to be displayed and to be installed in various locations and sizes. If an obstacle like a pedestrian appears, a sensor is transferring a created sensing information in correspondence into the control unit and stops the display operation of said flat panel display device in the virtue of it and changes the flat panel display device included in said display unit.

DE 102 38 531 A1 discloses a display device with a display panel with active optical elements for generating an image, which are arranged in the vehicle such that a driver may look at a driveway through the display.

DE 10 2014 014 412 A1 describes a vehicle, comprising an operator panel with a touch screen, that has self-luminous pixel elements, and with a control unit, that is configured to display a graphical user interface on the touch screen and to control at least one device of the motor vehicle different to the operating panel depending on a touch signal of the touch screen.

US 2017/334455 A1 describes a vehicle control system that comprises an automotive driving controller for executing any of a plurality of driving modes, and a visual field condition controller for controlling a front visual field condition of the vehicle based on the driving mode executed by the automated driving controller so as to be either a visible condition or a visual difficulty condition.

The above mentioned disadvantages, however, are either not addressed to, or a switching between the transparent and opaque state of the screen may happen very often, even if it is not necessary that the driver has a good view on the road and traffic, e.g., when the car is parked.

It is an object of the invention to provide a better and more intelligent control mechanism of a screen that is configured to change a degree of transparency.

The object is solved by the inventive method, and the inventive devices, respectively, according to the independent claims. Advantageous embodiments of the invention are indicated in the dependent claims.

The invention is based on the idea to switch a screen to a transparent state, thus to provide a visibility through the screen on the traffic, provided that a predetermined danger criterion is fulfilled according to the current situation. Like this, a driver immediately has a full view on the surroundings of his visual field in situations of imminent danger, and does not have to wait until the screen is displaced into a stowed position. Also, in situations where there is no imminent danger, if exemplary the car is on a parking spot and a person is crossing in front of the car, the screen remains in a displaying mode where, for example, a graphical user interface or a movie is continuously displayed. The invention is in particular advantageous when applied in a piloted driving mode, and/or an autonomous driving mode.

The method of the invention for operating a display device of a motor vehicle comprises the following steps that are performed by a control unit, preferable by a control unit of the motor vehicle. A control unit is a system unit that is designed to control one or more electrical systems or subsystems.

The method comprises receiving a driving situation signal of a sensor module, preferably of a sensor module of the motor vehicle, whereby the received driving situation signal describes a driving situation in the surroundings of the motor vehicle. Preferably, said received driving situation signal may describe a current driving situation and the current surroundings of the motor vehicle. Said driving situation signal may, for example, be an image signal and/or a video signal describing a camera recording of the surroundings. Alternatively or additionally, the driving situation signal may be a signal describing a virtual map wherein other motor vehicles and their movements and/or trajectories may be marked.

On basis of the received driving situation signal, the control unit performs a determining whether the driving situation fulfils a predetermined danger criterion. Said predetermined danger criterion describes a predetermined minimum probability that the motor vehicle is in an imminent dangerous traffic situation. For example, for deciding or checking whether the predetermined danger criterion is fulfilled or not, the control unit may calculate a trajectory of the motor vehicle and a pedestrian or another vehicle, and may, based on said trajectories, determine whether a collision is likely or not. In another example, the control unit may check whether current weather conditions could cause a dangerous situation or not. In another example, the control unit may decide whether enough pilot data are available to drive the motor vehicle in an autonomous driving mode.

If the predetermined danger criterion is fulfilled, the control unit provides a display control signal that describes a switching of the screen to a danger mode, in which a part of the surroundings of the motor vehicle is visible on or through said screen. Further, said provided display control signal is transmitted or sent to the display device.

The above mentioned advantages are reached. In situations of imminent danger, a driver immediately has full view to the outside of the car and does not have to wait until the screen is displaced mechanically. Thus, a driving safety is enhanced.

In addition to the quick response of the display device to the imminent danger situation by switching from the opaque state to the transparent state, a visibility on the traffic outside of the motor vehicle is further enhanced by the control unit performing, if the predetermined danger criterion is fulfilled, a providing of a displacement signal that describes a transition or moving of the screen from an exposed position, in which the screen is placed in a visual field of a user of the motor vehicle, to a stowed position, in which the screen is placed outside said visual field. Preferably, the providing of the displacement signal may be performed by generating said displacement signal by the control unit.

In a preferred embodiment of the inventive method, the control unit may perform a receiving an operating parameter signal that describes at least one operating parameter of the motor vehicle and/or pilot data of the motor vehicle. Said operating parameter and/or said pilot data may be sent by, for example, a driver assistance module. Said operating parameter may exemplary describe a current driving mode, a current velocity of the motor vehicle, or a parameter describing a steering angle. Said pilot data may, for example, describe a proximity to another vehicle, a current geographical position of the motor vehicle, a navigational route of the motor vehicle, or any other parameter collected by the driver assistance module for a piloted driving mode. In said embodiment, the determining whether the driving situation fulfils the predetermined danger criterion may be performed on the basis of the at least one received operating parameter and/or on the basis of the received pilot data. Said embodiment results in a much more accurate control of the display device, thus in an enhanced safety while driving.

The provided display control signal may, in a first variant, describe switching the screen to a transparent state such that the part of the surroundings of the motor vehicle is visible through the screen. In another variant, the provided display control signal may describe the controlling the screen to receive and display an image signal and/or a video signal of the sensor module, whereby said image signal and/or said video signal may describe an image and/or video of the part of the surroundings. Both variants are very efficient in providing a good view on the surroundings outside of the motor vehicle.

If, according to another embodiment of the inventive method, the provided driving situation signal describes a switching of the screen to the danger mode, in which the part of the surroundings is visible on only a part of the screen, or through a part of the screen only. In other words, one part of the screen may continuously display, for example, a graphical user interface, whereas another part of the screen may show the surroundings of the motor vehicle. Said embodiment is especially advantageous in those cases, whereby important information for driving, for example a current velocity of the motor vehicle, should still be displayed while the driver is looking on the traffic situation outside the car.

In some cases, a user of the motor vehicle might be interested in looking through the screen or onto the surroundings that are displayed by the screen, even if there is no imminent danger situation. For such situations, another embodiment of the inventive method comprises that the control unit receives a geo-information signal of the sensor module, whereby the received geo-information signal describes an information on a static or permanent characteristic of the surroundings. Preferably, said information, that may be called geo-information, may be an information on a traffic sign, or map data referring to a point of interest. On the basis of said received geo-information signal the control unit may determine of a geographical object in the surroundings, preferably localizes of the geographical object in the surroundings, whereby the geographical object fulfils a predetermined point of interest criterion. Said predetermined point of interest criterion may describe a relevance of the geographical object as a landmark. If the determined geographical object fulfils that predetermined point of interest criterion, the control unit provides, preferably generates, the display control signal and transmits or sends said provided display control signal to the display device.

The object is solved by a control unit that is configured to perform a method according to any one of the above described embodiments of the inventive method when used in combination with the display device and the sensor module. Preferably, the control unit may be designed as an electronic control unit (ECU) or as in integrated circuit. Preferably, the control module may comprise a processor unit, i.e. a component for data processing, e.g. a CPU. The optional processing unit may comprise at least one microprocessor and/or at least one microchip. The control module may optionally comprise a data storage, whereby the data storage may have stored a programme code for performing the inventive method. Thereby, the programme code is designed to cause the control module to perform any of the above mentioned embodiments of the inventive method when executed by the processing unit. The same advantages arise as already described above.

The object is solved by a display device comprising an embodiment of the inventive control unit. Preferably, a screen of the display device may comprise a transparent screen element and the sight protection element, said sight protection element being switchable between a transparent state and a non-transparent state. Said screen may also be called "display screen unit".

Said display screen unit may optionally be a combination of a transparent segment LCD display, e.g. a black transparent LCD display, and a TOLED or other transparent display. Another example of said display screen unit (or screen) is a combination of a switchable foil, or a switchable film, e.g. a black transparent switchable film, and a TOLED display. In one embodiment, the display screen unit may comprise a sight protection element, i.e. said exemplary switchable film as mentioned above and said sight protection element may be designed to be planar and to be arranged in a first display plane of the display screen unit. The display screen unit may further comprise a planar, transparent screen element arranged in a further display plane of the display screen unit, preferable in a direction of vision of a user positioned in front of the sight protection element, and arranged in a planar manner on the sight protection element. Thereby, the transparent screen element may, for example, be designed as a glass screen.

The above mentioned object is solved by a motor vehicle that comprises an embodiment of the inventive control unit. Said motor vehicle also comprises a sensor unit, and a display device, whereby the display device comprises a screen.

Said motor vehicle may preferably be designed as a passenger vehicle. In a further embodiment the motor vehicle, the screen (or display screen unit) of the display device may comprise a transparent screen element and the sight protection element, said sight protection element being switchable between a transparent state and a non-transparent state.

Advantageous embodiments of the method according to the present invention are to be regarded as advantageous embodiments of the devices according to the present invention and vice versa.

In the following, examples of the invention are described. The figures show in:
- Fig. 1: a schematic illustration of a preferred embodiment of the method of the invention, and the devices of the invention;
- Fig. 2: a schematic illustration of a further preferred embodiment of the method of the invention with the screen (display screen unit) in an opaque mode, displaying, e.g., a graphical user interface;
- Fig. 3: a schematic illustration of the embodiment of Fig. 2, whereby the screen is in a transparent state; and
- Fig. 4: an exploded view of an exemplary display screen unit (screen).

In the figures, the same elements or elements having the same functions are indicated by the same reference signs.

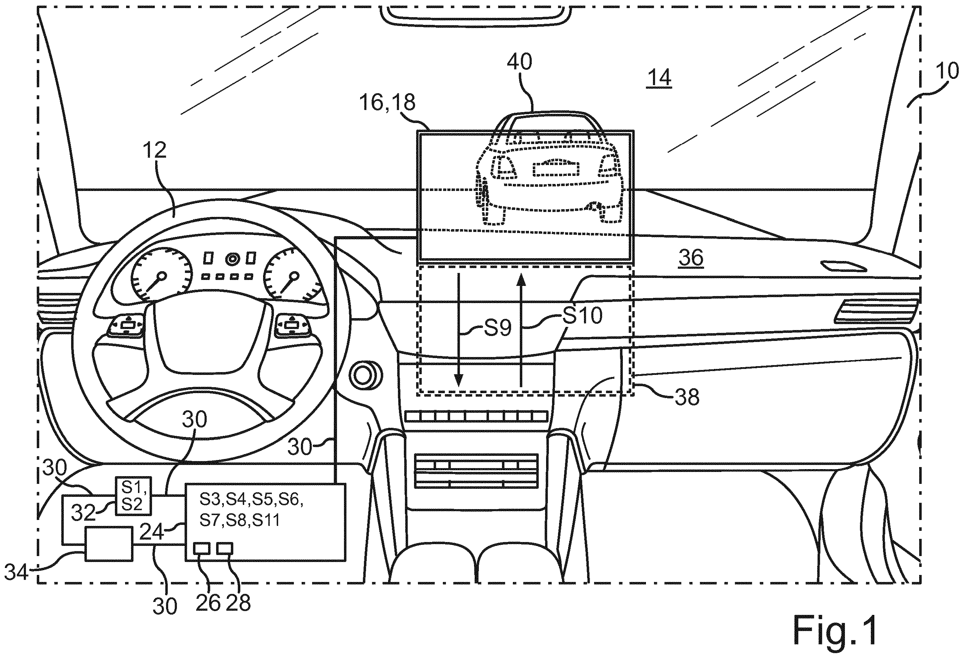

Fig. 1 exemplifies the principal of the inventive method, and the inventive control unit, as well as the inventive motor vehicle.

Fig. 1 shows an exemplary motor vehicle 10, e.g., a car, preferably being operated in a piloted or autonomous driving mode. Thereby Fig. 1 shows the view on the motor vehicle's 10 cockpit, with a steering wheel 12 and a windshield 14. As can be seen in Fig. 1, a display device 16 of motor vehicle 10 may be arranged, when in an exposed position, in a visual field of a passenger, for example a driver.

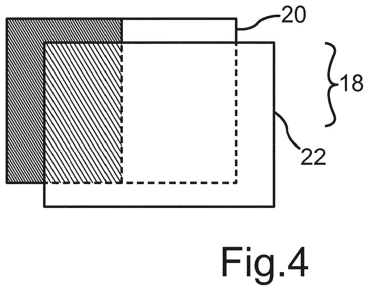

Preferably, display device 16 may comprise a display screen unit 18, in other words a screen. A preferred embodiment of a display screen unit 18 of said display device 16 is shown in Fig. 4. The display screen unit 18 may comprise a sight protection element 20, and a planar, transparent screen element 22, for example an LCD display, a transparent light emitting display ("TOLED") or TFT display, whereby the display screen unit 18 may, for example, be designed to display a graphical content in black and/or transparent, or to show all colours except black while being relatively transparent. The transparent screen element 22 may be planar, and be arranged on a planarly manner on a planar designed sight protection element 20, for example a switchable foil or a switchable film. Said sight protection element 20 may preferably be a Gauzy-film or a segmented transparent LCD display that may be laminated on the transparent screen element 22. A laminated display screen unit 18 has a very homogenous look and shows all colours including black. Alternatively, the display screen unit 18 may, for example be a smart glass display as known from prior art. Preferably, the display screen unit 18 may be free-standing, i.e. a stand-alone display screen unit 18.

A suitable sight protection element 20 that can be switched from a transparent state to a non-transparent state and vice versa is known from prior art and can be controlled by a control unit. Preferably, the sight protection element 20 may be a foil or glass that can be switched from a transparent state to a non-transparent state, i.e. an opaque state, and/or vice versa. Such sight protection element 20 may preferably be combined with a transparent screen element that may preferably be a transparent OLED display or P-OLED display.

Said control unit 24 is shown in Fig. 1, and may, for example, be a control unit 24 of the motor vehicle 10, preferably of the display device 16.

Control unit 24 may optionally comprise a processor unit 26, and/or a storage unit 28. Suitable storage units are known to the skilled person. A data communication link 30 may, for example, be a wire-bound data communication link 30, for example a data bus of the motor vehicle 10. Alternatively, a data communication link 30 may be a wireless data communication link 30, for example a WIFI connection or a Bluetooth connection.

Motor vehicle 10 of Fig. 1 may also comprise a sensor module 32, said sensor module 32 exemplarily comprising different kinds of sensors to sense a current driving situation. For example, sensor module 32 may comprise a camera that may be directed to the traffic in front of the motor vehicle 10. Sensor module 32, however, may comprise any kind of sensor being suitable for sensing information for, e.g., piloted driving.

Fig. 1 also shows an optional driver assistance unit 34 that may be configured as a driver assistant system. Such a driver assistant unit 34 may receive any kind of sensor information form sensor module 32 for, e.g. performing piloted driving mode.

The exemplary motor vehicle 10 of Fig. 1 also shows a dashboard 36, whereby said exemplary dashboard 36 may have, e.g., a shaft 38 or compartment, in which the display screen unit 18 may be moved from an exposed position into a stowed position, and vice versa from a stowed position to the exposed position as shown in Fig. 1. Means for displacing or moving said display screen unit 18 from the stowed into the exposed position, and from the exposed position into the stowed position, e.g. suitable motors and constructions to guide the display screen unit 18, are known to the skilled person.

In said exposed position, said display screen unit 18 may be arranged in the vision field of the driver, such that the driver may currently not see another vehicle 40 in front of this motor vehicle 10, if said display screen unit 18 is displaying a graphical content and/or is in an opaque state.

Sensor module 32 may, for example, permanently scan the surroundings of motor vehicle 10 (S1). Sensor module 32 may generate one or more respective driving situation signals describing the sensor data. The driving situation signal may, for example, be an image signal or a video signal picturing the surroundings. Sensor module 32 may transmit said provided driving situation signal to the control unit 24 (S2), which receives the driving situation signal in step S3. For example, in the exemplary situation of Fig. 1, display screen unit 18 may currently display a graphical content, and said driving situation signal may describe another vehicle 40 in front of the motor vehicle 10, for example by recording said vehicle 40 with a camera on a front of the motor vehicle 10. For example by using an image analysis software, control unit 24 may analyse the received driving situation signal.

A predetermined danger criterion that may be stored in a storage unit 28 may, for example, predetermine that the presence of another vehicle 40 may represent an imminent danger situation, if, for example, the other vehicle 40 in front of motor vehicle 10 has a distance to the front of motor vehicle 10 that falls below a predetermined distance. If, for example, the driving situation signal also describes a distance that falls below said limit, control unit 24 may determine in a step S4 that the current driving situation fulfils said predetermined danger criterion.

Control unit 24 may generate a display control signal (S5), which is be control signal for the display screen unit 18. Said generated display control signal may describe an immediate switching of the transparent state of display screen unit 18 to a non-transparent state. In S6, said display control signal is send or transmitted to display device 16. Display device 16 may then, as a reaction of receiving said display control signal, generate a predetermined electrical circuit, that causes the exemplary sight protection element 20 to switch from the non-transparent state to the transparent state. Optionally, said display control signal may also cause the display screen unit 18 to stop displaying the graphical content.

Said variant describes a variant wherein a driver of motor vehicle 10 may look through display screen unit 18. As an alternative, the display screen unit 18 may be controlled by the display control signal to display an image provided by sensor module 32, whereby said image may be an online camera recording of the other vehicle 40 in the surroundings of motor vehicle 10.

Alternatively or additionally, such switching may be controlled in response of a sensor signal that may describe the sound of a horn, for example a horn of a vehicle behind or in front of motor vehicle 10.

In order to make these variants more efficient, control unit 24 may receive an operating parameter signal from the driver assistance unit 34 in step S7, and thus base the determining step whether the driving situation fulfils the predetermined danger criterion on, for example, additional sensor data and/or map data.

Optionally, a driver or other passenger of motor vehicle 10 may, for example by pushing a predetermined button, activate a mode, wherein said transition to the transparent state triggers the switching to an online video of the surroundings on the display screen unit 18, preferably in case a point of interest is in the surroundings of motor vehicle 10. For said purpose, control unit 24 may receive a geo-information signal from sensor module 32. An information on, for example, a traffic sign in the surroundings of the vehicle 10 informing on a specific side of interest, for example a castle. Additionally or alternatively, the geo-information signal may be a signal describing map data. After receiving said geo-information signal (S8) the exemplary castle may be determined fulfilling a predetermined point of interest criterion. The providing of said display control signal (S5) and transmitting or sending the same to the display device may be caused by the finding, that said castle has specific relevance as a landmark.

A displacement of display screen unit 18 from the exposed position into a stowed position (S9) may be controlled by a respective displacement signal generated is step S11. Moving display screen unit 18 from the stowed position back into the exposed position (S10) may be performed after, for example, it is determined that the predetermined danger criterion is fulfilled.

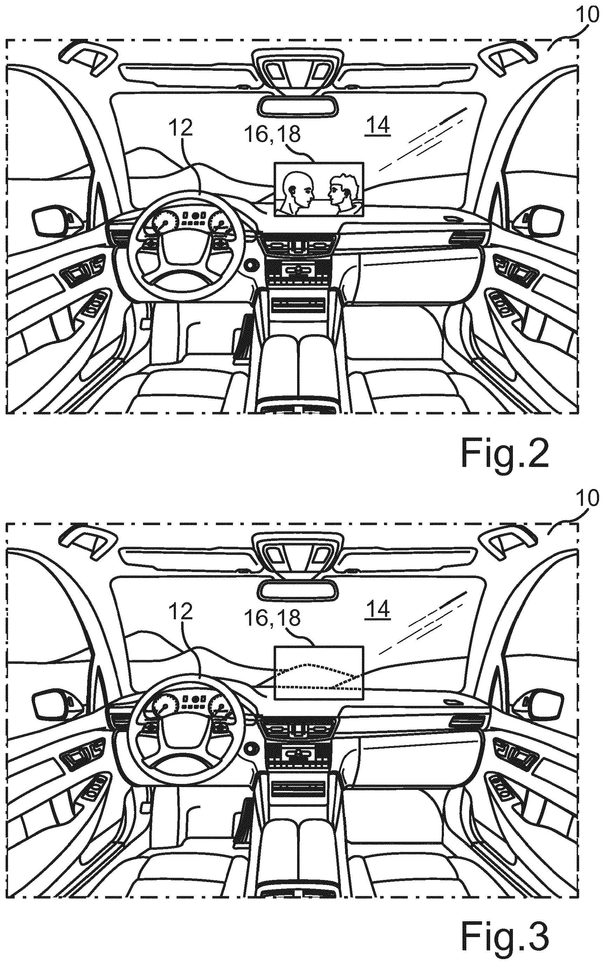

Fig. 2 and Fig. 3 exemplify another preferred embodiment, whereby the devices and the method as described for Fig. 1 may be applied here as well. Therefore, only a brief explanation of Fig. 2 and Fig. 3 are given in the following.

Control unit 24, as well as sensor module 32, and the optional driver assistance unit 34, may be hidden from the point of view given in Fig. 2 and Fig. 3. Fig. 2 shows display screen unit 18 in a non-transparent state or mode displaying a graphical content, for example a movie while motor vehicle 10 is operated in an autonomous driving mode. Surroundings of motor vehicle 10 may not be seen from the inside where the display screen unit 18 is arranged. Said display screen unit 18 may, for example, be operated in a TV mode.

In Fig. 3, however, either due to a current driving situation, or, for example, upon request of a passenger to have a look on a point of interest in the surroundings, said display screen unit 18 may be switched to a transparent state, in other words in a "danger mode".

Altogether, the examples describe a danger transition of a display or screen.

According to another example, a screen or display screen unit 18, that is limiting a visual field of a driver, may be switched to a transparent state in a situation of danger and/or upon request of the driver. This principal especially makes sense during an autonomous or piloted drive.

If a situation of danger occurs or is imminent, a quick transition of the task of driving to the driver is necessary or makes sense. Display screen unit 18 automatically switches to a transparent state. This is exemplified in the figures, especially in Fig. 2 and Fig. 3. This is important if the display screen unit 18 is big and displaceable, and which may limit the field of vision of a passenger, especially a driver. A mechanical displacement of display screen unit 18 may require a certain amount of time. However, the switching into the transparent mode is performed in very short time.

Advantageously, a driver has, in a situation of danger, immediately full view to the exterior of motor vehicle 10, and he does not have to wait until the display screen unit 18 is displaced into the stowed position mechanically. Display screen unit 18 may be switched to transparent on short notice, for example upon request of a user, for example in order to look at a point of interest quickly.

According to another example, a transparent screen or display screen unit 18 (for example a transparent OLED display) can be mounted in front of a switchable film or foil or laminated on said film or foil. Said film or foil may be switched between opaque and transparent and vice versa. Beside said exemplary display, other display technologies may be applied that allow switching between the described "display mode" and the "transparent mode".

A suitable sensor module 32, that may also be described as "sensor and electronic unit", may detect or register a possible occurring situation of danger and may switch a current display content to transparent. Further, a switching upon request of the driver is possible, for example by means of gesture, voice control, touch control, or by keys.

## Claims

1. Method for operating a display device (16) of a motor vehicle (10), the method comprising, performed by a control unit (24):
- receiving a driving situation signal of a sensor module (32, S3), whereby the received driving situation signal describes a driving situation in the surroundings of the motor vehicle (10),
- on basis of the received driving situation signal: determining whether the driving situation fulfils a predetermined danger criterion, whereby the provided danger criterion describes a predetermined minimum probability that the motor vehicle (10) is in an imminent dangerous traffic situation (S4),
- if the predetermined danger criterion is fulfilled: providing a display control signal that describes a switching of a screen to a danger mode, in which a part of the surroundings of the motor vehicle (10) is visible on or through said screen of the display device (16, S5),
- sending said provided display control signal to the display device (16, S6), and
- if the predetermined danger criterion is fulfilled: providing a displacement signal that describes a transition of the screen from an exposed position, in which the screen is placed in a visual field of a user of the motor vehicle (10), to a stowed position, in which the screen is placed outside said visual field (S11).

2. Method according to claim 1, the method comprising, performed by the control unit (24):
- receiving an operating parameter signal that describes at least one operating parameter of the motor vehicle (10) and/or pilot data of the motor vehicle (10, S7),
whereby determining whether the driving situation fulfils the predetermined danger criterion (S4) is performed on the basis of said at least one received operating parameter and/or of said received pilot data.

3. Method according to any one of the preceding claims, whereby the provided display control signal describes:
- switching the screen to a transparent state such that the part of the surroundings is visible through the screen; or
- controlling the screen to receive and display an image signal and/or a video signal of the sensor module (32), whereby said image signal and/or said video signal describes an image and/or video of the part of the surroundings.

4. Method according to any one of the preceding claims, whereby the provided display control signal describes switching the screen to the danger mode, in which the part of the surroundings is visible on or through a part of the screen only.

5. Method according to any one of the preceding claims, comprising, performed by the control unit (24):
- receiving a geo-information signal of the sensor module (32, S8), whereby the received geo-information signal describes an information on a static characteristic of the surroundings,
- on the basis of said received geo-information signal: determining a geographical object in the surroundings that fulfils a predetermined point of interest criterion, whereby said predetermined point of interest criterion describes a relevance of the geographical object as a landmark (S9),
- providing the display control signal (S5) and sending said provided display control signal to the display device (16, S6), if the determined geographical object fulfils said predetermined point of interest criterion.

6. Control unit (24) that is configured to perform a method according to any one of the preceding claims when used in combination with the display device (16) and the sensor module (32).

7. Display device (16), comprising a control unit (24) according to claim 6.

8. Display device (16) of claim 7, **characterized in that** a display screen unit (18) comprises a transparent screen element (22) and a sight protection element (20), said sight protection element (20) being switchable between a transparent state and a non-transparent state.

9. Motor vehicle (10) comprising a sensor module (32) and a display device (16) that comprises a display screen unit (18), whereby the motor vehicle (10) is **characterized by** a control unit (24) according to claim 6.

10. Motor vehicle (10) according to claim 9, **characterized in that** the display screen unit (18) comprises a transparent screen element (22) and a sight protection element (20), said sight protection element (20) being switchable between a transparent state and a non-transparent state.

## Patentansprüche

1. Verfahren zum Betreiben einer Anzeigevorrichtung (16) eines Kraftfahrzeugs (10), wobei das Verfahren durch eine Steuereinheit (24) durchgeführt umfasst:
- Empfangen eines Fahrsituationssignals eines Sensormoduls (32, S3), wobei das empfangene Fahrsituationssignal eine Fahrsituation in der Umgebung des Kraftfahrzeugs (10) beschreibt,
- auf der Basis des empfangenen Fahrsituationssignals: Bestimmen, ob die Fahrsituation ein vorbestimmtes Gefahrenkriterium erfüllt, wobei das vorgesehene Gefahrenkriterium eine vorbestimmte minimale Wahrscheinlichkeit beschreibt, dass sich das Kraftfahrzeug (10) in einer unmittelbar bevorstehenden gefährlichen Verkehrssituation befindet (S4),
- wenn das vorbestimmte Gefahrenkriterium erfüllt ist: Bereitstellen eines Anzeigesteuersignals, das ein Umschalten eines Bildschirms auf einen Gefahrenmodus beschreibt, in dem ein Teil der Umgebung des Kraftfahrzeugs (10) auf dem oder durch den Bildschirm der Anzeigevorrichtung (16) hindurch sichtbar ist (S5),
- Senden des bereitgestellten Anzeigesteuersignals zur Anzeigevorrichtung (16, S6), und
- wenn das vorbestimmte Gefahrenkriterium erfüllt ist: Bereitstellen eines Verlagerungssignals, das einen Übergang des Bildschirms von einer exponierten Position, in der der Bildschirm in einem Sichtfeld eines Benutzers des Kraftfahrzeugs (10) angeordnet ist, in eine verstaute Position, in der der Bildschirm außerhalb des Sichtfeldes angeordnet ist, beschreibt (S11).

2. Verfahren nach Anspruch 1, wobei das Verfahren durch die Steuereinheit (24) durchgeführt umfasst:
- Empfangen eines Betriebsparametersignals, das mindestens einen Betriebsparameter des Kraftfahrzeugs (10) beschreibt, und/oder von Pilotdaten des Kraftfahrzeugs (10, S7),
wobei das Bestimmen, ob die Fahrsituation das vorbestimmte Gefahrenkriterium erfüllt (S4), auf der Basis des mindestens einen empfangenen Betriebsparameters und/oder der empfangenen Pilotdaten durchgeführt wird.

3. Verfahren nach einem der vorangehenden Ansprüche, wobei das bereitgestellte Anzeigesteuersignal beschreibt:
- das Umschalten des Bildschirms auf einen transparenten Zustand, so dass der Teil der Umgebung durch den Bildschirm hindurch sichtbar ist; oder
- das Steuern des Bildschirms, um ein Bildsignal und/oder ein Videosignal des Sensormoduls (32) zu empfangen und anzuzeigen, wobei das Bildsignal und/oder das Videosignal ein Bild und/oder Video des Teils der Umgebung beschreiben.

4. Verfahren nach einem der vorangehenden Ansprüche, wobei das bereitgestellte Anzeigesteuersignal das Umschalten des Bildschirms auf den Gefahrenmodus beschreibt, in dem der Teil der Umgebung nur auf einem oder durch einen Teil des Bildschirms hindurch sichtbar ist.

5. Verfahren nach einem der vorangehenden Ansprüche, das durch die Steuereinheit (24) durchgeführt umfasst:
- Empfangen eines Geoinformationssignals des Sensormoduls (32, S8), wobei das empfangene Geoinformationssignal eine Information über eine statische Eigenschaft der Umgebung beschreibt,
- auf der Basis des empfangenen Geoinformationssignals: Bestimmen eines geographischen Objekts in der Umgebung, das ein vorbestimmtes Kriterium eines interessierenden Punkts erfüllt, wobei das vorbestimmte Kriterium des interessierenden Punkts eine Relevanz des geographischen Objekts als Landmarke beschreibt (S9),
- Bereitstellen des Anzeigesteuersignals (S5) und Senden des bereitgestellten Anzeigesteuersignals zur Anzeigevorrichtung (16, S6), wenn das bestimmte geographische Objekt das vorbestimmte Kriterium des interessierenden Punkts erfüllt.

6. Steuereinheit (24), die dazu eingerichtet ist, ein Verfahren nach einem der vorangehenden Ansprüche durchzuführen, wenn sie in Kombination mit der Anzeigevorrichtung (16) und dem Sensormodul (32) verwendet wird.

7. Anzeigevorrichtung (16) mit einer Steuereinheit (24) nach Anspruch 6.

8. Anzeigevorrichtung (16) nach Anspruch 7, **dadurch gekennzeichnet, dass** eine Anzeigebildschirmeinheit (18) ein transparentes Bildschirmelement (22) und ein Sichtschutzelement (20) umfasst, wobei das Sichtschutzelement (20) zwischen einem transparenten Zustand und einem nicht transparenten Zustand umschaltbar ist.

9. Kraftfahrzeug (10) mit einem Sensormodul (32) und einer Anzeigevorrichtung (16), die eine Anzeigebildschirmeinheit (18) umfasst, wobei das Kraftfahrzeug (10) durch eine Steuereinheit (24) nach Anspruch 6 gekennzeichnet ist.

10. Kraftfahrzeug (10) nach Anspruch 9, **dadurch gekennzeichnet, dass** die Anzeigebildschirmeinheit (18) ein transparentes Bildschirmelement (22) und ein Sichtschutzelement (20) umfasst, wobei das Sichtschutzelement (20) zwischen einem transparenten Zustand und einem nicht transparenten Zustand umschaltbar ist.

## Revendications

1. Procédé pour faire fonctionner un dispositif d'affichage (16) d'un véhicule à moteur (10), le procédé, mis en oeuvre par une unité de commande (24), comportant :
- recevoir un signal de situation de conduite d'un module de capteur (32, S3), en sorte que le signal de situation de conduite reçu décrit une situation de conduite aux alentours du véhicule à moteur (10),
- sur la base du signal de situation de conduite reçu : déterminer si la situation de conduite satisfait à un critère de danger prédéterminé, en sorte que le critère de danger fourni décrit une probabilité minimale prédéterminée que le véhicule à moteur (10) soit dans une situation de trafic dangereux imminent (S4),
- si le critère de danger prédéterminé est satisfait : fournir un signal de commande d'affichage qui décrit un basculement d'un écran vers un mode de danger, dans lequel une partie des alentours du véhicule à moteur (10) est visible sur ou à travers ledit écran du dispositif d'affichage (16, S5),
- envoyer ledit signal de commande d'affichage fourni au dispositif d'affichage (16, S6), et
- si le critère de danger prédéterminé est satisfait : fournir un signal de déplacement qui décrit une transition de l'écran d'une position exposée, dans laquelle l'écran est placé dans un champ visuel d'un utilisateur du véhicule à moteur (10), à une position rangée, dans laquelle l'écran est placé en dehors dudit champ visuel (S11).

2. Procédé selon la revendication 1, le procédé, mis en oeuvre par l'unité de commande (24), comportant :
- recevoir un signal de paramètre de fonctionnement qui décrit au moins un paramètre de fonctionnement du véhicule à moteur (10) et/ou des données de pilotage du véhicule à moteur (10, S7),
en sorte que la détermination de si la situation de conduite satisfait au critère de danger prédéterminé (S4) est effectuée sur la base dudit au moins un paramètre de fonctionnement reçu et/ou desdites données de pilotage reçues.

3. Procédé selon l'une quelconque des revendications précédentes, le signal de commande d'affichage fourni décrivant :
- le basculement de l'écran vers un état transparent de telle sorte que la partie des alentours est visible à travers l'écran ; ou
- la commande de l'écran de manière à recevoir et afficher un signal d'image et/ou un signal vidéo du module de capteur (32), en sorte que ledit signal d'image et/ou ledit signal vidéo décrit une image et/ou une vidéo de la partie des alentours.

4. Procédé selon l'une quelconque des revendications précédentes, le signal de commande d'affichage fourni décrivant le basculement de l'écran vers le mode de danger, dans lequel la partie des alentours est visible sur ou à travers une partie de l'écran uniquement.

5. Procédé selon l'une quelconque des revendications précédentes, mis en oeuvre par l'unité de commande (24), comportant :
- recevoir un signal de géo-information du module de capteur (32, S8), en sorte que le signal de géo-information reçu décrit une information sur une caractéristique statique des alentours,
- sur la base dudit signal de géo-information reçu : déterminer un objet géographique aux alentours qui satisfait à un critère de point d'intérêt prédéterminé, en sorte que ledit critère de point d'intérêt prédéterminé décrit une pertinence de l'objet géographique en tant que point de repère (S9),
- fournir le signal de commande d'affichage (S5) et envoyer ledit signal de commande d'affichage fourni au dispositif d'affichage (16, S6), si l'objet géographique déterminé satisfait audit critère de point d'intérêt prédéterminé.

6. Unité de commande (24) qui est configurée pour mettre en oeuvre un procédé selon l'une quelconque des revendications précédentes lorsqu'elle est utilisée en combinaison avec le dispositif d'affichage 16) et le module de capteur (32).

7. Dispositif d'affichage (16), comportant une unité de commande (24) selon la revendication 6.

8. Dispositif d'affichage (16) selon la revendication 7, **caractérisé en ce qu'**une unité d'écran d'affichage (18) comporte un élément d'écran transparent (22) et un élément de protection de la vue (20), ledit élément de protection de la vue (20) pouvant être basculé entre un état transparent et un état non transparent.

9. Véhicule à moteur (10) comportant un module de capteur (32) et un dispositif d'affichage (16) qui comporte une unité d'écran d'affichage (18), le véhicule à moteur (10) étant **caractérisé par** une unité de commande (24) selon la revendication 6.

10. Véhicule à moteur (10) selon la revendication 9, **caractérisé en ce que** l'unité d'écran d'affichage (18) comporte un élément d'écran transparent (22) et un élément de protection de la vue (20), ledit élément de protection de la vue (20) pouvant être basculé entre un état transparent et un état non transparent.
